# EUROPEAN PATENT APPLICATION

(11) **EP 2 765 104 A1**
(43) Date of publication of application: **13.08.2014**
(21) Application number: 12838136.5
(22) Date of filing: 06.08.2012
(51) Int. Cl.: B65H 75/36

(54) **HOUSING DEVICE**

(30) Priority: 07.10.2011 JP 2011223225
(71) Applicant: Chuo Hatsujo Kabushiki Kaisha, Nagoya-shi, Aichi 458-8505 (JP)
(72) Inventor: SUGIURA Akehito, Nagoya-shi Aichi 458-8505 (JP); TOMOTO Takashi, Nagoya-shi Aichi 458-8505 (JP)
(74) Representative: Kramer - Barske - Schmidtchen
(86) International application number: PCT/JP2012/070005
(87) International publication number: WO 2013/051335

(57) **Abstract**

A housing device 10 includes a movable pulley unit 20, an operating force adjustment mechanism (first weights 18), and a guide mechanism. The movable pulley unit is provided so as to be movable relative to a housing 12 in an up-down direction while being guided by the guide mechanism, and is movable among a first position at which the long object is housed within the housing, a second position at which the long object is pulled out from the housing, and a third position which is set between the first position and the second position. The long object housed within the housing is pulled out from the housing when the movable pulley unit 20 moves upward, and the long object pulled out from the housing is housed in the housing when the movable pulley moves downward. The first weights 18 are separated from the movable pulley unit when the movable pulley unit moves between the first position and the third position, and moves together with the movable pulley unit when the movable pulley unit moves between the third position and the second position.

## Description

### TECHNICAL FIELD

The technology disclosed in the present specification relates to a housing device which houses a long object (e.g., a charging cable, an electrical cord, a hose, etc.).

### BACKGROUND ART

A housing device which houses a long object such as an electrical cord has been developed (e.g., Japanese Patent Application Publication No. 2010-52861). The housing device in Japanese Patent Application Publication No. 2010-52861 includes a drum mounted rotatably to a housing, and an electrical cord is wound on an outer peripheral surface of the drum. The electrical cord is pulled out from the drum by a required length when being used, and is wound up after being used.

### SUMMARY OF INVENTION

### TECHNICAL PROBLEM

In such a housing device, it would be convenient if it is possible to automatically house the long object in the housing device after the long object is used. When this function is added to the housing device in Patent Literature 1, it is conceivable to bias the drum in a winding-up direction by a spring. In the case where such a configuration is employed, when the long object is pulled out, the drum rotates against the biasing force of the spring and elastic energy is stored in the spring. After the long object is used, the drum rotates in the winding-up direction by the elastic energy stored in the spring and the long object pulled out from the drum is automatically wound up on the drum.

However, the configuration in which the drum is biased in the winding-up direction by the spring has a problem that as the length by which the long object is pulled out is lengthened, the operating force of an operator for pulling out the long object is increased to be excessively great. When the spring constant of the spring which biases the drum is decreased in order to solve this problem, it is possible to prevent the operating force of the operator from becoming excessively great. However, when the spring constant of the spring which biases the drum is decreased, the elastic energy stored in the spring is reduced and thus the force biasing the drum in the winding-up direction is reduced. Thus, a situation occurs where it is impossible to stably wind up the long object on the drum.

An object of the present specification is to provide a housing device which is able to prevent an operating force for pulling out a long object from becoming excessively great and which is able to stably house the pulled-out long object therein.

### SOLUTION TO PROBLEM

A cord housing device disclosed in the present specification is a housing device for housing a long object and includes a housing, a movable pulley, an operating force adjustment mechanism, and a guide mechanism. An intermediate portion of the long object is wound on the movable pulley, the movable pulley is provided so as to be movable relative to the housing in an up-down direction while being guided by the guide mechanism, and the movable pulley is movable among a first position at which the long object is housed within the housing, a second position at which the long object is pulled out from the housing, and a third position which is set between the first position and the second position. The long object housed within the housing is pulled out from the housing when the movable pulley moves upward from the first position toward the second position. The long object pulled out from the housing is housed in the housing when the movable pulley moves downward from the second position toward the first position. The operating force adjustment mechanism generates a first biasing force biasing the movable pulley toward the first position when the movable pulley moves between the first position and the third position, and generates a second biasing force biasing the movable pulley toward the third position when the movable pulley moves between the third position and the second position. The second biasing force is greater than the first biasing force. It should be noted that the "first biasing force" generated by the operating force adjustment mechanism may be any value as long as it is smaller than the "second biasing force". Therefore, the "first biasing force" may be "0". In this case, the operating force adjustment mechanism generates the "first biasing force" that is "0".

The housing device is switched between a state where the long object is housed within the housing and a state where the long object is pulled out from the housing, by the movable pulley moving relative to the housing in the up-down direction while being guided by the guide mechanism. If the weight of the long object, a frictional force applied to the long object, and the like are neglected, a force for moving the movable pulley upward is a value determined by the weight of the movable pulley and the "first biasing force" generated by the operating force adjustment mechanism when the movable pulley moves between the first position and the third position, and is a value determined by the weight of the movable pulley and the "second biasing force" generated by the operating force adjustment mechanism when the movable pulley moves between the third position and the second position. The movable pulley and the "biasing force" generated by the operating force adjustment mechanism are adjustable, and thus it is possible to prevent an operating force for pulling out the long object from becoming excessively great.

Meanwhile, a force required in order to house the long object in the housing is great when the length of the long object that has been pulled out from the housing is long, and is small when the length of the long object that has been pulled out from the housing is short. Thus, if the force for housing the long object in the housing is made constant and is set to have an appropriate magnitude when the length of the long object that has been pulled out from the housing is long, the force becomes excessively great when the length of the long object that has been pulled out from the housing is short. On the other hand, if the force for housing the long object in the housing is made constant and is set to have an appropriate magnitude when the length of the long object that has been pulled out from the housing is short, the force becomes excessively small when the length of the long object that has been pulled out from the housing is long. In the above housing device, the force for housing the long object in the housing is a value determined by the weight of the movable pulley and the "second biasing force" generated by the operating force adjustment mechanism when the movable pulley moves between the second position and the third position, and is a value determined by the weight of the movable pulley and the "first biasing force" generated by the operating force adjustment mechanism when the movable pulley moves between the third position and the first position. Here, since the "second biasing force" is a value greater than the "first biasing force", when the length of the long object that has been pulled out from the housing is long, the force is at a value (a large value) determined by the weight of the movable pulley and the "second biasing force", and when the length of the long object that has been pulled out from the housing is short, the force is at a value (a small value) determined by the weight of the movable pulley and the "first biasing force". Therefore, it is possible to stably house the long object in the housing with an appropriate force.

Here, the "up-down direction" in which the movable pulley moves may be such a direction that the movable pulley that has moved upward is movable downward due to its own weight. Thus, in addition to the case where the movable pulley moves in the vertical direction, for example, the movable pulley may move obliquely with respect to the vertical direction.

In one aspect of the above housing device, the operating force adjustment mechanism may include a first weight. In this case, the first weight may be separated from the movable pulley when the movable pulley moves between the first position and the third position, and may move together with the movable pulley when the movable pulley moves between the third position and the second position. According to such a configuration, when the movable pulley moves between the first position and the third position, the first biasing force generated by the operating force adjustment mechanism is "0", and when the movable pulley moves between the third position and the second position, the second biasing force generated by the operating force adjustment mechanism is a value determined by the weight of the first weight. The use of the weight allows adjustment of the operating force for pulling out the long object from the housing and the force for housing the long object in the housing.

In another aspect of the above housing device, the operating force adjustment mechanism may include a spring. In this case, the spring may remain unchanged with its spring length being a free length when the movable pulley moves between the first position and the third position, and the spring length of the spring may be shortened in accordance with a position of the movable pulley and the spring may bias the movable pulley toward the third position when the movable pulley moves between the third position and the second position. According to such a configuration, when the movable pulley moves between the first position and the third position, the length of the spring is its free length, and thus a restoring force (i.e., the first biasing force) applied from the spring to the movable pulley is "0". On the other hand, when the movable pulley moves between the third position and the second position, the length of the spring is shortened in accordance with the position of the movable pulley. As a result, a restoring force (the second biasing force) corresponding to the position of the movable pulley is applied from the spring to the movable pulley. The use of the spring allows adjustment of the operating force for pulling out the long object from the housing and the force for housing the long object in the housing. In addition, the use of the spring allows such adjustment that the force biasing the movable pulley is gradually increased or decreased. Thus, it is possible to smoothly pull out the long object and house the long object.

In the above housing device, the guide mechanism may include a guide which is mounted on the housing and extends in the up-down direction within the housing. An engagement portion which engages with the guide may be formed in the movable pulley, and the movable pulley may move in the up-down direction while being guided by the guide. According to such a configuration, the movable pulley is guided by the guide, and thus the mechanism which guides the movable pulley is allowed to have a simple configuration.

In the above housing device, the guide may include a support portion which supports the first weight. In this case, when the movable pulley moves between the first position and the third position, the first weight may be supported by the support portion of the guide, and when the movable pulley moves between the third position and the second position, the first weight may be separated from the support portion of the guide and may move together with the movable pulley. According to such a configuration, the guide mechanism which guides the movable pulley allows the first weight to move together with the movable pulley and be separated from the movable pulley.

In one aspect of the above housing device, the guide mechanism may include two guides which are mounted on the housing, extend in the up-down direction within the housing, and are provided at both sides in a direction of a rotation axis of the movable pulley, respectively. In this case, a first engagement portion which engages with one of the two guides and a second engagement portion which engages with the other of the two guides may be formed in the movable pulley. According to such an aspect, both sides in the direction of the rotation axis of the movable pulley are guided by the guides, respectively, and thus it is possible to smoothly move the movable pulley in the up-down direction.

In the above case, one of the two guides and one of the two engagement portions may be offset toward one side in a direction orthogonal to the rotation axis of the movable pulley and orthogonal to a direction of gravity, and the other of the two guides and the other of the two engagement portions may be offset toward another side in the direction orthogonal to the rotation axis of the movable pulley and orthogonal to the direction of gravity. According to such a configuration, frictional forces produced between the movable pulley and the guides are reduced, and it is possible to more smoothly move the movable pulley in the up-down direction.

In another aspect of the above housing device, the guide mechanism may include two guides which are mounted on the housing, extend in the up-down direction within the housing, and are provided at one side in a direction of a rotation axis of the movable pulley. A first engagement portion which engages with one of the two guides and a second engagement portion which engages with the other of the two guides may be formed in the movable pulley. According to such a configuration, guides and engagement portions may not be provided at the other side in the direction of the rotation axis of the movable pulley. Thus, even when there is no space at the other side in the direction of the rotation axis of the movable pulley, it is possible to provide the guide mechanism which guides the movable pulley.

In still another aspect of the above housing device, the guide mechanism may include two guides which are mounted on the housing, extend in the up-down direction within the housing, and are provided at both sides, respectively, in a direction orthogonal to a rotation axis of the movable pulley and orthogonal to a direction of gravity. A first engagement portion which engages with one of the two guides and a second engagement portion which engages with the other of the two guides may be formed in the movable pulley. According to such a configuration, even when there is no space at both sides in the direction of the rotation axis of the movable pulley, it is possible to provide the guide mechanism which guides the movable pulley.

In the above case, one of the two guides and one of the two engagement portions may be offset toward one side in a direction of a rotation axis of the movable pulley, and the other of the two guides and the other of the two engagement portions may be offset toward another side in the direction of the rotation axis of the movable pulley. According to such a configuration, frictional forces produced between the movable pulley and the guides are reduced, and it is possible to more smoothly move the movable pulley in the up-down direction.

Each housing device described above may further include a second weight. In this case, the movable pulley may be movable to a fourth position which is set between the third position and the second position. When the movable pulley moves between the first position and the third position, the movable pulley may be separated from the first weight and the second weight. When the movable pulley moves between the third position and the fourth position, the movable pulley and the first weight may move together, but the movable pulley and the second weight may be separated from each other. When the movable pulley moves between the fourth position and the second position, the movable pulley, the first weight, and the second weight may move together. According to such a configuration, the operating force for pulling out the long object is adjusted at three levels, and the force for housing the long object in the housing is also adjusted at three levels. Thus, it is possible to more appropriately pull out and house the long object.

### BRIEF DESCRIPTION OF DRAWINGS

FIG. 1 is a side view of a housing device of an embodiment and is a diagram showing the internal structure of the housing device by cutting a housing (a state where a charging cable is housed within the housing).
FIG. 2 is a front view of the housing device of the embodiment and is a diagram showing also the internal structure within the housing (the state where the charging cable is housed within the housing).
FIG. 3 is a side view of the housing device of the embodiment and is a diagram showing the internal structure of the housing device by cutting the housing (a state where the charging cable is pulled out from the housing).
FIG. 4 is a front view of the housing device of the embodiment and is a diagram showing also the internal structure within the housing (the state where the charging cable is pulled out from the housing).
FIG. 5 is a front view of a fixed pulley unit.
FIG. 6 is a diagram of the fixed pulley unit as viewed at a position along a VI-VI line in FIG. 5. It should be noted that FIG. 6 does not show a cross-section of the fixed pulley unit taken along the VI-VI line.
FIG. 7 is a cross-sectional view of a fixed pulley.
FIG. 8 is a diagram for explaining a ratchet mechanism provided in the fixed pulley unit.
FIG. 9 is a front view of a movable pulley unit.
FIG. 10 is a top view of the movable pulley unit.
FIG. 11 is a front view of a movable pulley-side weight.
FIG. 12 is a diagram showing a schematic configuration of a guide mechanism.
FIG. 13 is a diagram showing a schematic configuration of a housing device according to a modification.
FIG. 14 is a diagram showing a schematic configuration of a guide mechanism according to a modification.
FIG. 15 is a front view showing a schematic configuration of a guide mechanism according to another modification.
FIG. 16 is a bottom view of the guide mechanism shown in FIG. 15.
FIG. 17 is a diagram showing the configuration of a fixed pulley unit of a guide mechanism according to still another modification.
FIG. 18 is a front view showing a schematic configuration of a guide mechanism according to still another modification.
FIG. 19 is a bottom view of the guide mechanism shown in FIG. 18.
FIG. 20 is a front view showing a schematic configuration of a guide mechanism according to still another modification.
FIG. 21 is a bottom view of the guide mechanism shown in FIG. 20.
FIG. 22 is a side view of the guide mechanism shown in FIG. 20.
FIG. 23 is a front view showing a schematic configuration of a guide mechanism according to still another modification.
FIG. 24 is a bottom view of the guide mechanism shown in FIG. 23.
FIG. 25 is a side view of the guide mechanism shown in FIG. 23.
FIG. 26 is a side view of a housing device according to another embodiment and is a diagram showing the internal structure of the housing device by cutting a housing (a state where a charging cable is housed within the housing).
FIG. 27 is a side view of a housing device according to a modification of the embodiment shown in FIG. 26 and is a diagram showing the internal structure of the housing device by cutting a housing (a state where a charging cable is housed within the housing).

### DESCRIPTION OF EMBODIMENTS

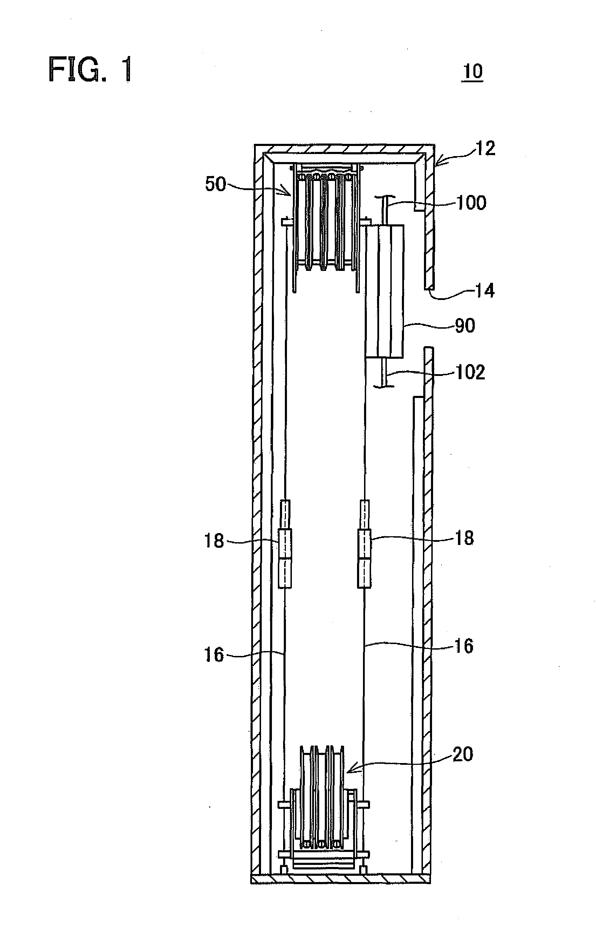

A housing device 10 of an embodiment is a so-called charging station and houses a charging cable 100 for charging a battery mounted in an electric vehicle (EV) or a plug-in hybrid vehicle (PHEV). As shown in FIGS. 1 to 4, the housing device 10 includes a housing 12 and a pulley mechanism (a fixed pulley unit 50 and a movable pulley unit 20) housed within the housing 12.

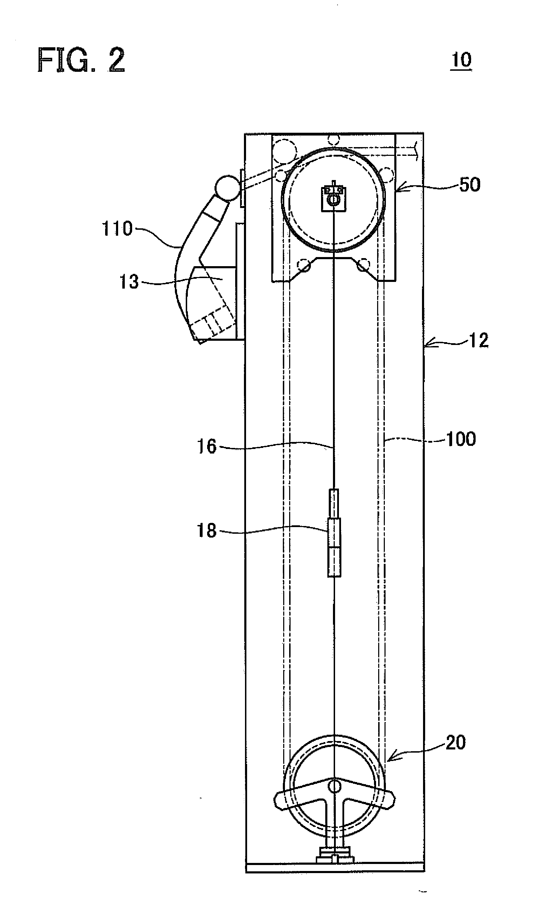

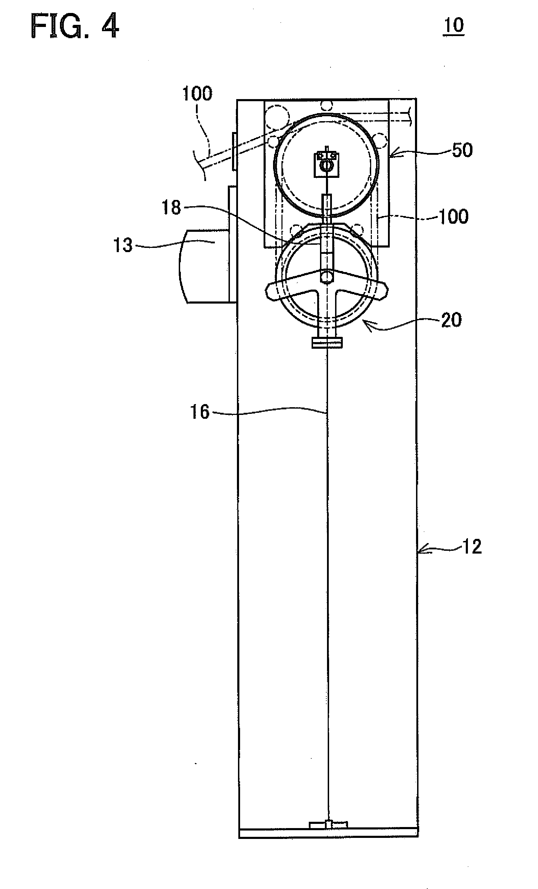

The housing 12 is formed, for example, in a rectangular parallelepiped shape from a plurality of plates. It should be noted that the shape of the housing 12 is not limited to the rectangular parallelepiped shape and the housing 12 can be formed in a circular column shape or a polygonal column shape (e.g., a hexagonal column shape). As shown in FIGS. 2 and 4, a hook 13 is formed on a surface of the housing 12 from which the charging cable 100 is pulled out. The hook 13 is able to hold a charging connector 110 provided at a leading end of the charging cable 100.

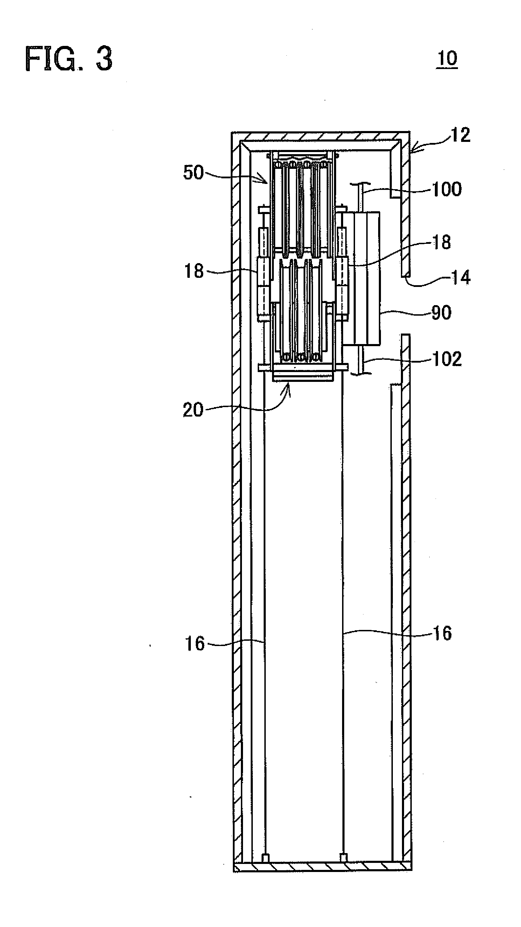

In addition, as shown in FIGS. 1 and 3, a through hole 14 is formed in a side plate of the housing 12. The through hole 14 faces a CCID (Charging Circuit Interrupt Device) 90 arranged within the housing 12. A base end of the charging cable 100 is connected to the CCID 90. The CCID 90 is connected to an external power source, which is not shown, by a power cord 102. A user is allowed to view a display portion of the CCID 90 through the through hole 14 of the housing 12, thereby recognizing a state of charge of a battery.

The pulley mechanism includes the fixed pulley unit 50 and the movable pulley unit 20. An intermediate portion of the charging cable 100 (i.e., a portion between the leading end and the base end of the charging cable 100) is wound on the fixed pulley unit 50 and the movable pulley unit 20 as described in detail later. The fixed pulley unit 50 is mounted on a top plate of the housing 12 so as to be immovable relative to the housing 12 in an up-down direction. Upper ends of guide wires 16 are fixed to the fixed pulley unit 50, and lower ends of the guide wires 16 are fixed to a bottom plate of the housing 12.

The movable pulley unit 20 is movable within the housing 12 in the up-down direction while being guided by the guide wires 16. In a state where the movable pulley unit 20 is located at a bottom portion of the housing 12 (a state in FIGS. 1 and 2), the charging cable 100 is fully housed within the housing 12. In a state where the movable pulley unit 20 is located at an upper portion of the housing 12 (a state in FIGS. 3 and 4), the charging cable 100 is pulled out most from the housing 12. In other words, when the movable pulley unit 20 moves within the housing 12 from the lower portion toward the upper portion, the charging cable 100 housed within the housing 12 is pulled out from the housing 12. On the other hand, when the movable pulley unit 20 moves within the housing 12 from the upper portion toward the lower portion, the charging cable 100 pulled out from the housing 12 is housed in the housing 12.

It should be noted that first weights 18 are mounted on the above-described guide wires 16. As is clear from FIGS. 1 and 2, in the state where the movable pulley unit 20 is located at the bottom portion of the housing 12, the first weights 18 are supported by the guide wires 16. On the other hand, as is clear from FIGS. 3 and 4, in the state where the movable pulley unit 20 is located at the upper portion of the housing 12, the first weights 18 are supported by the movable pulley unit 20. In other words, the movable pulley unit 20 and the first weights 18 move together during a period when the movable pulley unit 20 moves between a position at which the movable pulley unit 20 comes into contact with bottom surfaces of the first weights 18 and a position shown in FIGS. 3 and 4.

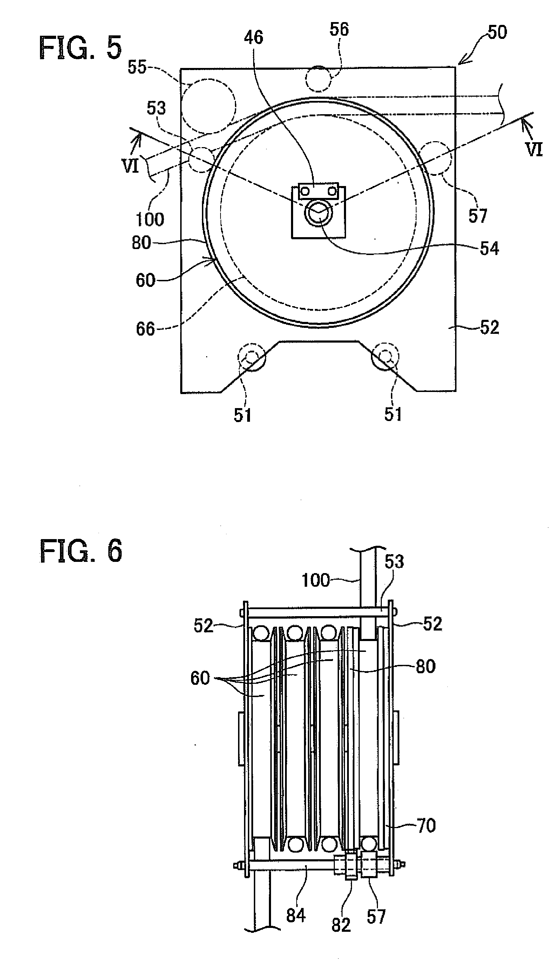

Next, the fixed pulley unit 50 will be described in detail. As shown in FIGS. 5 and 6, the fixed pulley unit 50 includes two support plates 52, a first shaft 54 fixed to the support plates 52, and four fixed pulleys 60 supported rotatably on the first shaft 54.

The support plates 52 are plates having substantially a rectangular shape when being seen in a front view, and upper ends thereof are attached to the top plate of the housing 12. Mounting portions 46 are formed at substantially the centers of the support plates 52, and the upper ends of the guide wires 16 are attached to the mounting portions 46.

The first shaft 54 is fixed at one end thereof to one of the two support plates 52 and is fixed at the other end thereof to the other of the two support plates 52. In other words, the first shaft 54 connects the two support plates 52 to each other. The four fixed pulleys 60 are rotatably mounted on the first shaft 54. In a state where each fixed pulley 60 is mounted on the first shaft 54, the four fixed pulleys 60 are interposed between the two support plates 52. Since the four fixed pulleys 60 are mounted on the single first shaft 54, the rotation axes of the four fixed pulleys 60 are located on the same straight line and the four fixed pulleys 60 are arranged so as to be aligned in the direction of the rotation axes.

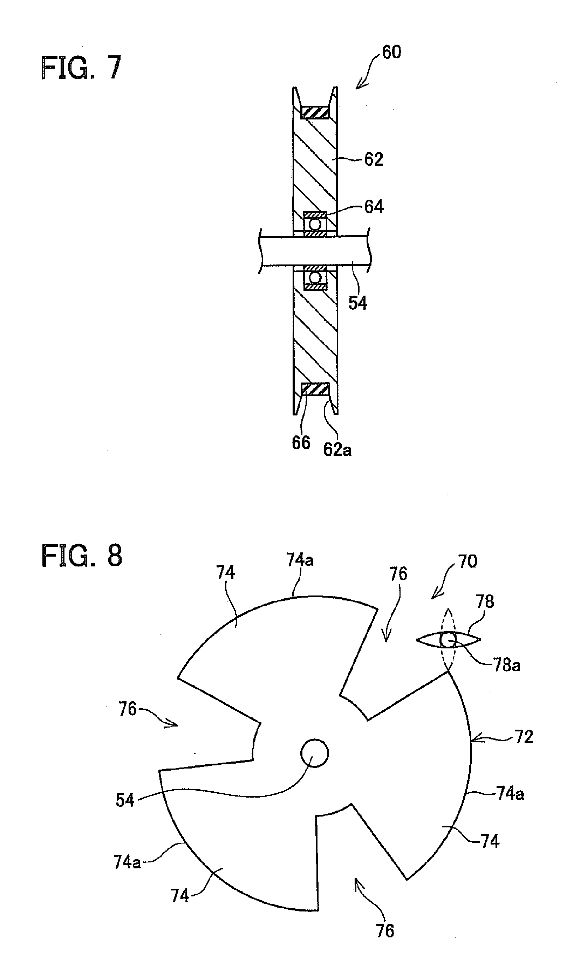

As shown in FIG. 7, each fixed pulley 60 includes a main body 62 and a rubber sheet 66 mounted on an outer peripheral surface of the main body 62. A bearing 64 is provided between an inner peripheral surface of the main body 62 and an outer peripheral surface of the first shaft 54. In the present embodiment, since each fixed pulley 60 is supported on the first shaft 54 via the bearing 64, each fixed pulley 60 is rotatable around the first shaft 54 with a small force. Meanwhile, a groove 62a is formed on the outer peripheral surface of the main body 62 in order to prevent falling off of the charging cable 100. The rubber sheet 66 is mounted on a bottom surface of the groove 62a. Thus, when the charging cable 100 is wound on the fixed pulley 60, the charging cable 100 is brought into contact with the rubber sheet 66. In the present embodiment, since the rubber sheet 66 is provided on the outer peripheral surface of the main body 62, occurrence of slippage between the fixed pulley 60 and the charging cable 100 is prevented. Thus, smooth pulling out and winding up of the charging cable 100 are allowed.

As shown in FIGS. 5 and 6, a first gear 80 and a ratchet gear 70 are fixed to the fixed pulley 60 on which the leading end side (the charging connector 110 side) of the charging cable 100 is wound (the rightmost fixed pulley in the FIG. 6), of the four fixed pulleys 60. Specifically, the first gear 80 is fixed to one lateral surface (a left lateral surface in FIG. 6) of the fixed pulley 60, and the ratchet gear 70 is fixed to the other lateral surface (a right lateral surface in FIG. 6) of the fixed pulley 60.

As clearly shown in FIG. 6, the first gear 80 meshes with a second gear 82, and the second gear 82 is fixed to a second shaft 84. The second shaft 84 is rotatably supported at one end thereof by one of the support plates 52 and is rotatably supported at the other end thereof by the other support plate 52. A pressing roller 57 is mounted on the second shaft 84. The pressing roller 57 presses the charging cable 100 wound on the fixed pulley 60, toward the fixed pulley 60 side to restrain slippage between the fixed pulley 60 and the charging cable 100.

As is clear from FIG. 6, the diameter of the fixed pulley 60 and the diameter of the pressing roller 57 are different from each other. For this reason, in order to pull out the charging cable 100 without the charging cable 100 slipping on the fixed pulley 60 and the pressing roller 57, a rotation speed of the fixed pulley 60 and a rotation speed of the pressing roller 57 need to be different from each other. Thus, a one-way clutch which is not shown is provided between the second shaft 84 and the pressing roller 57. When the charging cable 100 is pulled out, the one-way clutch does not engage with the second shaft 84 and the pressing roller 57 is allowed to freely rotate relative to the second shaft 84. Therefore, when the fixed pulley 60 rotates, the rotation is transmitted to the second shaft 84 via the first gear 80 and the second gear 82, whereby the second shaft 84 rotates. However, since the one-way clutch does not engage with the second shaft 84, the pressing roller 57 rotates at a rotation speed different from the rotation speed of the fixed pulley 60. As a result, the charging cable 100 is smoothly pulled out from the fixed pulley 60 while slippage between the charging cable 100, and the fixed pulley 60 and the pressing roller 57 is restrained. On the other hand, when rotation of the fixed pulley 60 is restricted by a later-described ratchet mechanism, rotation of the second shaft 84 is also restricted via the first gear 80 and the second gear 82. The one-way clutch engages with the second shaft 84, and thus rotation of the pressing roller 57 is also restricted. As a result, even when it is attempted to forcedly push the charging cable 100 into the housing 12, the pressing roller 57 does not rotate due to the rubber sheet 66 of the fixed pulley 60 and the one-way clutch at the pressing roller 57, and thus the charging cable 100 is not pushed into the housing 12.

As shown in FIG. 8, the ratchet gear 70 includes projection regions 74 and recess regions 76. Ratchet grooves (not shown) are formed on an outer peripheral surface 74a of each projection region 74. A ratchet pawl 78 is engageable with each ratchet groove of each projection region 74. An outer peripheral surface of each recess region 76 is recessed from the outer peripheral surface 74a of each projection region 74, and no ratchet groove is formed thereon. Thus, the ratchet gear 70 and the ratchet pawl 78 are not engageable with each other at each recess region 76. Since the ratchet gear 70 is fixed to the fixed pulley 60, when the fixed pulley 60 rotates, the ratchet gear 70 also rotates. When the fixed pulley 60 rotates in a direction in which the charging cable 100 is pulled out (hereinafter, referred to as a pulling-out direction), the ratchet gear 70 and the ratchet pawl 78 do not engage with each other, and the ratchet gear 70 and the fixed pulley 60 are allowed to freely rotate. On the other hand, when the fixed pulley 60 rotates in a direction in which the charging cable 100 is wound up (hereinafter, referred to as a winding-up direction), the ratchet groove and the ratchet pawl 78 engage with each other at the projection region 74 of the ratchet gear 70, and thus rotation of the ratchet gear 70 and the fixed pulley 60 is restricted. Meanwhile, the ratchet gear 70 and the ratchet pawl 78 do not engage with each other at each recess region 76 of the ratchet gear 70, and thus rotation of the ratchet gear 70 and the fixed pulley 60 is not restricted. Thus, the ratchet gear 70 and the fixed pulley 60 rotate in the winding-up direction until the ratchet pawl 78 comes into engagement with the ratchet groove of the projection region 74 of the ratchet gear 70. Since the housing device 10 of the present embodiment has the above configuration, the charging cable 100 is pulled out by a desired length and this state can be kept in the housing device 10. It should be noted that it is possible to release the engagement between the ratchet pawl 78 and the ratchet gear 70 with an operation switch which is not shown. Therefore, when the operation switch is operated to release the engagement between the ratchet pawl 78 and the ratchet gear 70, the fixed pulley 60 is made rotatable in the winding-up direction.

It should be noted that as shown in FIGS. 5 and 6, in addition to the pressing roller 57, various guide rollers 53, 55, and 56 are rotatably mounted on the support plates 52. The guide rollers 53 and 55 guide the leading end side of the charging cable 100 toward the charging connector 110. The guide roller 56 is mounted on the centers of upper end edges of the support plates 52. The guide roller 56 prevents the charging cable 100 from rising from each fixed pulley 60. Since these guide rollers 53, 55, and 56 are provided, the frictional resistance between the charging cable 100 and each fixed pulley 60 is reduced. In addition, stoppers 51 are mounted on lower end edges of the support plates 52. The stoppers 51 are members for restricting upward movement of the movable pulley unit 20. The movable pulley unit 20 is restricted from moving upward by coming into contact with the stoppers 51 (see FIG. 4).

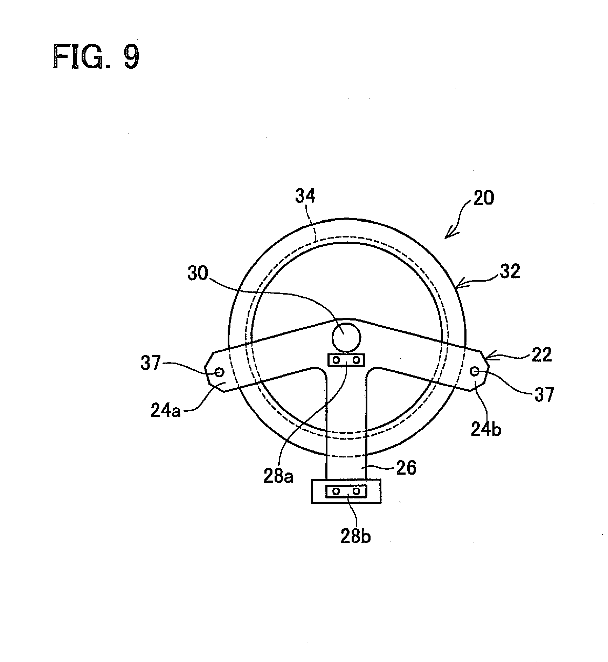

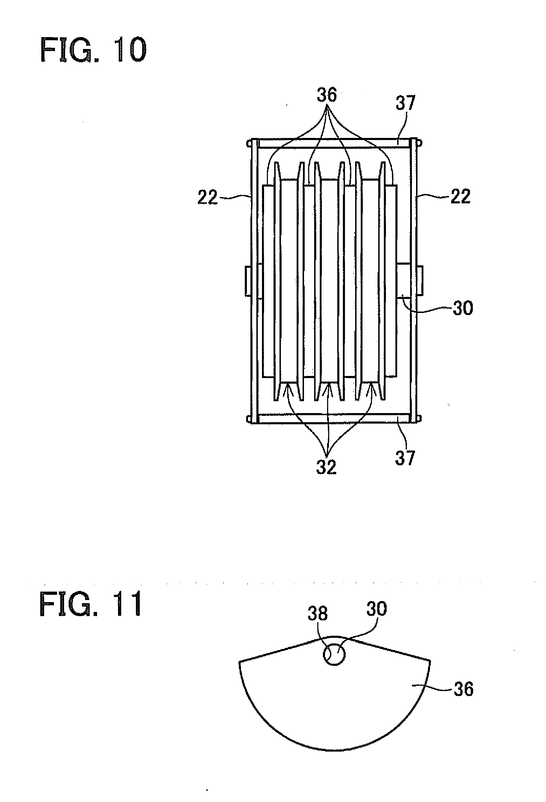

Next, the movable pulley unit 20 will be described in detail. As shown in FIGS. 9 and 10, the movable pulley unit 20 includes two support plates 22, a third shaft 30 fixed to the support plates 22, and three movable pulleys 32 supported rotatably on the third shaft 30.

Each support plate 22 includes a first plate portion 26 extending downward from a position at which the third shaft 30 is fixed; and two second plate portions 24a and 24b extending obliquely downward from an upper end of the first plate portion 26. At the upper end and a lower end of the first plate portion 26, insertion portions 28a and 28b are provided through which the guide wire 16 is inserted. Since the two insertion portions 28a and 28b are provided in each support plate 22, the movable pulley unit 20 is movable in the up-down direction in a stable state while being guided by the guide wires 16. At lower ends of the second plate portions 24a and 24b, holding members 37 are provided which prevent the charging cable 100 from falling off from the movable pulleys 32 (see FIG. 10).

The third shaft 30 is fixed at one end thereof to one of the two support plates 22 and is fixed at the other end thereof to the other of the two support plates 22. The two support plates 22 are connected to each other by the third shaft 30.

The three movable pulleys 32 are rotatably mounted on the third shaft 30. In a state where the movable pulleys 32 are mounted on the third shaft 30, the three movable pulleys 32 are interposed between the two support plates 22. Since the three movable pulleys 32 are mounted on the single third shaft 30, the rotation axes of the three movable pulleys 32 are located on the same straight line and the three movable pulleys 32 are arranged so as to be aligned in the direction of the rotation axes. The movable pulleys 32 also have the same configuration as the fixed pulleys 60, a groove is formed on an outer peripheral surface of each movable pulley 32 in order to prevent falling off of the charging cable 100, and a rubber sheet 34 is provided on a bottom surface of the groove. In addition, each movable pulley 32 is also rotatably supported on the third shaft 30 via a bearing which is not shown. Since each movable pulley 32 is supported on the third shaft 30 via the bearing, each movable pulley 32 is rotatable around the third shaft 30 with a small force.

As shown in FIG. 10, second weights 36 are provided at the outer sides of the left and right movable pulleys 32 and between the adjacent movable pulleys 32, respectively. As shown in FIG. 11, the second weights 36 are sector-shaped plates and have through holes 38 into which the third shaft 30 is inserted. When the third shaft 30 is inserted into the through holes 38, the second weights 36 are supported so as to be rotatable relative to the third shaft 30. Since the second weights 36 are sector-shaped plates, the second weights 36 rotate relative to the third shaft 30 due to their own weights such that the arc portions of the sectors are located at the lower side. Therefore, since the second weights 36 are mounted on the third shaft 30, the center of gravity of the movable pulley unit 20 is lowered and behavior of the movable pulley unit 20 is stabilized. In addition, by providing the second weights 36 in the movable pulley unit 20, a force for pulling out the charging cable 100 from the housing 12 and a force for winding up the charging cable 100 into the housing 12 are adjusted.

It should be noted that the charging cable 100 is wound on the above-described fixed pulley unit 50 and the above-described movable pulley unit 20 in the following manner. Specifically, the charging cable 100 guided into the housing 12 is initially wounded on the fixed pulley 60 to which the first gear 80 and the ratchet gear 70 are fixed (the rightmost fixed pulley in FIG. 6), then wound on the one movable pulley 32, and subsequently wound on the three fixed pulleys 60 and the two movable pulleys 32 in order of the fixed pulley 60 and the movable pulley 32.

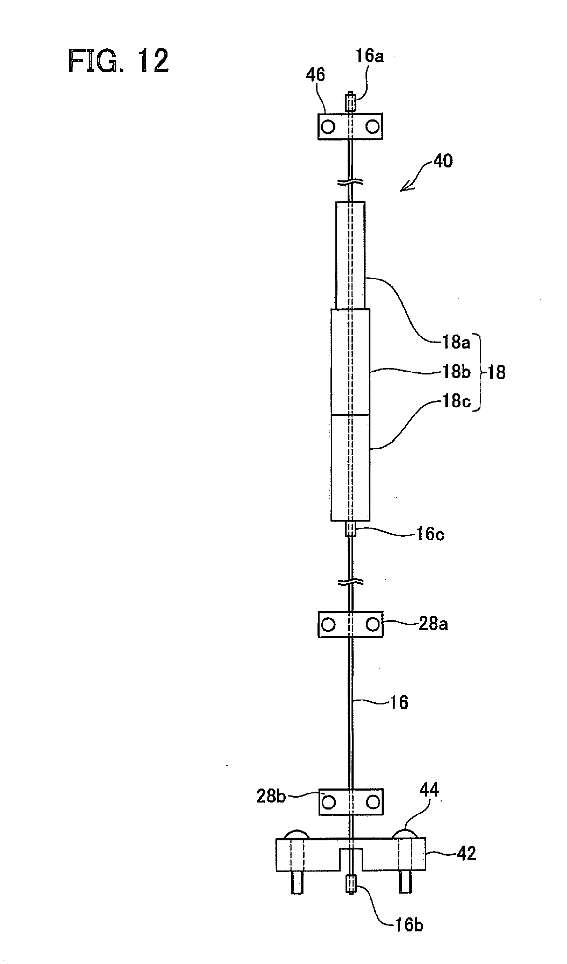

Here, a guide mechanism 40 which guides up/down movement of the movable pulley unit 20 will be described with reference to FIG. 12. As is clear from the above description, the guide mechanism 40 includes the guide wires 16 which guide the movable pulley unit 20. As shown in FIG. 12, the upper end 16a of the guide wire 16 is attached to the mounting portion 46 of the fixed pulley unit 50. The lower end 16b of the guide wire 16 is attached to a mounting block 42. The mounting block 42 is fixed to the bottom plate of the housing 12 by means of screws 44. Thus, the guide wire 16 extends in the up-down direction within the housing 12. As described above, the insertion portions 28a and 28b are provided in the movable pulley unit 20, and the guide wire 16 is inserted through these insertion portions 28a and 28b. Thus, the movable pulley unit 20 moves in the up-down direction within the housing 12 while being guided by the guide wires 16.

A support portion 16c which supports the first weight 18 is provided at a middle point of the guide wire 16. The support portion 16c is sized so as to be able to pass through the insertion portions 28a and 28b of the movable pulley unit 20. Meanwhile, the first weight 18 supported by the support portion 16c is composed of three cylindrical weights 18a, 18b, and 18c. The guide wire 16 is inserted through center holes of the cylindrical weights 18a, 18b, and 18c, and the weights 18a, 18b, and 18c are movable in the up-down direction between the upper end 16a and the middle point (the support portion 16c) of the guide wire 16 while being guided by the guide wire 16. In addition, the weights 18a, 18b, and 18c are sized so as to not be able to pass through the insertion portions 28a and 28b of the movable pulley unit 20. Therefore, when the movable pulley unit 20 moves between the lower end 16b and the middle point (the support portion 16c) of the guide wire 16, the first weight 18 is supported by the support portion 16c of the guide wire 16. In other words, the movable pulley unit 20 and the first weight 18 are separated from each other, and only the movable pulley unit 20 moves in the up-down direction (see FIGS. 1 and 2). On the other hand, when the movable pulley unit 20 moves between the middle point (the support portion 16c) and the upper end 16a of the guide wire 16, the first weight 18 is supported by the movable pulley unit 20, and the movable pulley unit 20 and the first weight 18 move together in the up-down direction (see FIGS. 3 and 4). It should be noted that the weight of the first weight 18 can be set, for example, to about 1/2 of the total weight of the charging cable 100 housed within the housing 12.

An operation of the above-described housing device 10 will be described. In order to pull out the charging cable 100 from the housing device 10, the user holds the charging connector 110 and applies an operating force (a pulling force) to the charging cable 100 via the charging connector 110. Thus, the movable pulley unit 20 (i.e., the movable pulleys 32) moves upward while being guided by the guide wires 16, and the charging cable 100 is pulled out from the inside of the housing 12. When the user stops applying the operating force (the pulling force) to the charging cable 100, rotation of the fixed pulley unit 50 stops by the ratchet mechanism (the ratchet gear 70 and the ratchet pawl 78), and the up/down movement of the movable pulley unit 20 also stops. Thus, in the housing device 10 of the present embodiment, the charging cable 100 is pulled out from the inside of the housing 12 by a desired length, and this state is kept. Therefore, the user is allowed to easily connect the charging connector 110 to a vehicle body.

Here, when the movable pulley unit 20 moves between the lower ends 16b and the middle points (the support portions 16c) of the guide wires 16, the first weights 18 are supported by the support portions 16c of the guide wires 16, and only the movable pulley unit 20 moves in the up-down direction (see FIGS. 1 and 2). Therefore, the operating force (the pulling force) for pulling out the charging cable 100 has a magnitude corresponding to the weight of the movable pulley unit 20 and the weight, the frictional force, and the like of the charging cable 100 that has been wound up by the pulley mechanism (the movable pulley unit 20 and the fixed pulley unit 50). Although the length of the charging cable 100 that has been wound up by the pulley mechanism is long and the weight, the frictional force, and the like thereof are great, since the movable pulley unit 20 and the first weight 18 are separated from each other, the operating force (the pulling force) for pulling out the charging cable 100 does not become excessively great.

On the other hand, when the movable pulley unit 20 moves between the middle points (the support portions 16c) and the upper ends 16a of the guide wires 16, the first weights 18 are supported by the movable pulley unit 20, and the movable pulley unit 20 and the first weights 18 move together in the up-down direction (see FIGS. 3 and 4). Although the movable pulley unit 20 and the first weights 18 move together, since the length of the charging cable 100 that has been wound up by the pulley mechanism (the movable pulley unit 20 and the fixed pulley unit 50) is short and the weight, the frictional force, and the like thereof are small, the operating force (the pulling force) for pulling out the charging cable 100 does not become excessively great. In addition, since the movable pulley unit 20 and the first weights 18 move together, a situation is alleviated where the operating force (the pulling force) for pulling out the charging cable 100 is greatly different between the state where the movable pulley unit 20 is located at the lower ends 16b of the guide wires 16 (the state in FIGS. 1 and 2) and the state where the movable pulley unit 20 is located at the upper ends 16a of the guide wires (the state in FIGS. 3 and 4).

On the other hand, when the charging cable 100 is housed in the housing device 10, engagement between the ratchet gear 70 and the ratchet pawl 78 of the ratchet mechanism is released. Thus, the movable pulley unit 20 moves downward due to its own weight, and, accordingly, the charging cable 100 is automatically housed in the housing 12.

Here, when the movable pulley unit 20 moves between the middle points (the support portions 16c) and the upper ends 16a of the guide wires 16, the movable pulley unit 20 and the first weight 18 move together (the state in FIGS. 3 and 4). Therefore, the force for winding up the charging cable 100 becomes a force corresponding to the weights of the movable pulley unit 20 and the first weights 18. Meanwhile, when the movable pulley unit 20 moves between the middle points (the support portions 16c) and the upper ends 16a of the guide wires 16, the length of the charging cable 100 that has been pulled out from the housing 12 is long, and the length of the charging cable 100 that has been wound up by the pulley mechanism is short. Thus, a relatively great force is required in order to wind up the charging cable 100. For these reasons, in the housing device 10 of the present embodiment, the force for winding up the charging cable 100 does not become excessively great, and it is possible to wind up the charging cable 100 with an appropriate force.

On the other hand, when the movable pulley unit 20 moves between the lower ends 16b and the middle points (the support portions 16c) of the guide wires 16, only the movable pulley unit 20 moves (the state in FIGS. 1 and 2). Therefore, the force for winding up the charging cable 100 becomes a force corresponding to the weight of the movable pulley unit 20. Meanwhile, when the movable pulley unit 20 moves between the lower ends 16b and the middle points (the support portions 16c) of the guide wires 16, the length of the charging cable 100 that has been pulled out from the housing 12 is short, and the length of the charging cable 100 that has been wound up by the pulley mechanism is long. Therefore, a great force is not required in order to wind up the charging cable 100. For these reasons, it is possible to wind up the charging cable 100 with an appropriate force.

As is clear from the above description, in the housing device 10 of the present embodiment, the charging cable 100 is housed in the housing 12 by using the pulley mechanism (the fixed pulley unit 50 and the movable pulley unit 20). Therefore, adjustment of the number and the movement amounts of the movable pulleys allows the length of the charging cable that can be housed within the housing 12 to be adjusted to any length. In addition, since the simple pulley mechanism is used, a breakdown is less likely to occur.

In addition, in the housing device 10 of the present embodiment, the charging cable 100 is automatically wound up into the housing 12 by using the weights of the movable pulley unit 20 and the first weight 18. Thus, the force for pulling out the charging cable 100 does not become excessively great, and the force for winding up the charging cable 100 is allowed to have an appropriate magnitude. Therefore, it is possible to stabilize the force for pulling out the charging cable 100 and the force for winding up the charging cable 100.

Furthermore, in the housing device 10 of the present embodiment, the guide wires 16 are used in the guide mechanism which guides the movable pulley unit 20. Thus, it is possible to reduce the size of the guide mechanism and it is possible to reduce the size of the housing 12. Moreover, the movable pulleys 32 and the fixed pulleys 60 are rotatably supported on the shafts 30 and 54 via the bearings. Thus, the frictional resistances of the movable pulleys 32 and the fixed pulleys 60 are reduced, and it is possible to pull out and wind up the charging cable 100 with a small force.

While the details of an embodiment of the present invention have been explained above, these are not to be considered as being limitative, or as limiting the scope of the Claims. Embodiments in which various alterations and changes have been made to the concrete case described above by way of example are also included within the scope of the techniques described in the Claims.

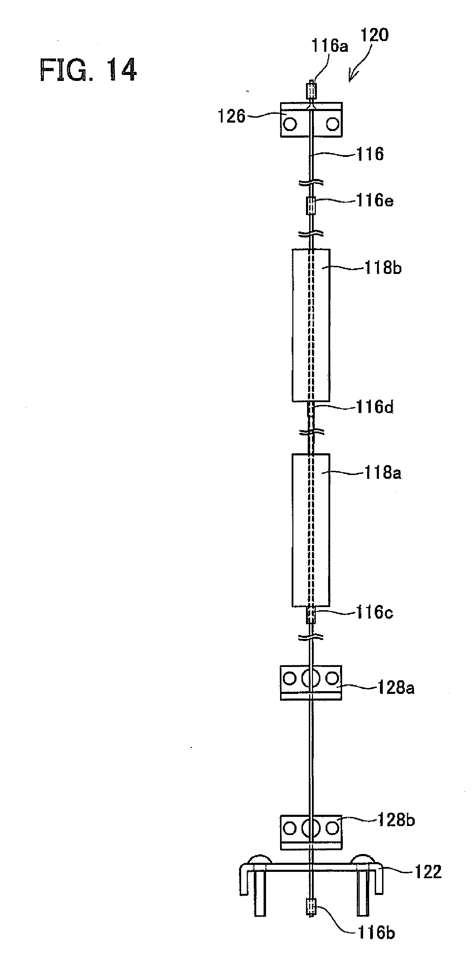

For example, in the above-described embodiment, the operating force for pulling out the charging cord 100 from the housing 12 (i.e., the force for winding up the charging cord 100 into the housing 12) is adjusted at two levels. However, the technology disclosed in the present specification is not limited to such a configuration, and the operating force for operating the charging cord 100 may be adjusted at a plurality of levels. For example, as in a guide mechanism 120 shown in FIG. 14, support portions 116c and 116d may be provided at two locations on a guide wire 116 and may support weights 118a and 118b, and the operating force may be adjusted at three levels.

Specifically, similarly to the above-described embodiment, an upper end 116a of the guide wire 116 is attached to a mounting portion 126 of the fixed pulley unit 50, and a lower end 116b of the guide wire 116 is fixed to the bottom plate of the housing 12 via a mounting block 122. The guide wire 116 is inserted through insertion portions 128a and 128b of the movable pulley unit 20.

The support portion 116c which supports the weight 118a, the support portion 116d which supports the weight 118b, and a stopper 116e are provided on a middle portion of the guide wire 116. The support portions 116c and 116d are arranged so as to be spaced apart from each other in the up-down direction and are sized so as to allow the insertion portions 128a and 128b to pass therethrough. In addition, the diameter of the support portion 116d is smaller than the diameter of the support portion 116c. The stopper 116e is provided between the support portion 116d and the upper end 116a and restricts upward movement of the weights 118a and 118b. The diameter of the stopper 116e is the same as the diameter of the support portion 116c.

The weights 118a and 118b are cylindrical weights, and the guide wire 116 is inserted through center holes of the weights 118a and 118b. The center hole of the weight 118a is sized so as to not allow the insertion portions 128a and 128b, the support portion 116c, and the stopper 116e to pass therethrough but is sized so as to allow the support portion 116d to pass therethrough. In addition, the center hole of the weight 118b is sized so as to not allow the insertion portions 128a and 128b, the support portions 116c and 116d, and the stopper 116e to pass therethrough. Therefore, the weight 118a is movable in the up-down direction between the stopper 116e and the support portion 116c (a first middle point (corresponding to an example of a "third position" in claims)) of the guide wire 116 while being guided by the guide wire 16. In addition, the weight 118b is movable in the up-down direction between the stopper 116e and the support portion 116d (a second middle point (corresponding to an example of a "fourth position" in claims)) of the guide wire 116 while being guided by the guide wire 116.

Here, the weights 118a and 118b are sized so as to not be able to pass through the insertion portions 128a and 128b of the movable pulley unit 20. Therefore, when the movable pulley unit 20 moves between the lower end 116b and the first middle point (the support portion 116c) of the guide wire 116, the weights 118a and 118b are supported by the support portions 116c and 116d, respectively, of the guide wire 116. In other words, the movable pulley unit 20 and the weights 118a and 118b are separated from each other, and only the movable pulley unit 20 moves in the up-down direction. On the other hand, when the movable pulley unit 20 moves between the first middle point (the support portion 116c) and the second middle point (the support portion 116d) of the guide wire 116, the weight 118b is supported by the support portion 116d of the guide wire 116, but the weight 118a is supported by the movable pulley unit 20, and the movable pulley unit 20 and the weight 118a move together in the up-down direction. Furthermore, when the movable pulley unit 20 moves between the second middle point (the support portion 116d) and the upper end (the stopper 116e) of the guide wire 116, the weights 118a and 118b are supported by the movable pulley unit 20, and the movable pulley unit 20 and the weights 118a and 118b move together in the up-down direction.

As is clear from the above description, according to the guide mechanism 120 shown in FIG. 14, the operating force for pulling out the charging cord 100 from the housing 12 (the force for winding up the charging cord 100 into the housing 12) is adjusted at three levels. Thus, it is possible to more smoothly pull out and wind up the charging cord. It should be noted that in the example shown in FIG. 14, the operating force is adjusted at three levels, but the operating force may be adjusted at four or more levels and can be adjusted at any levels.

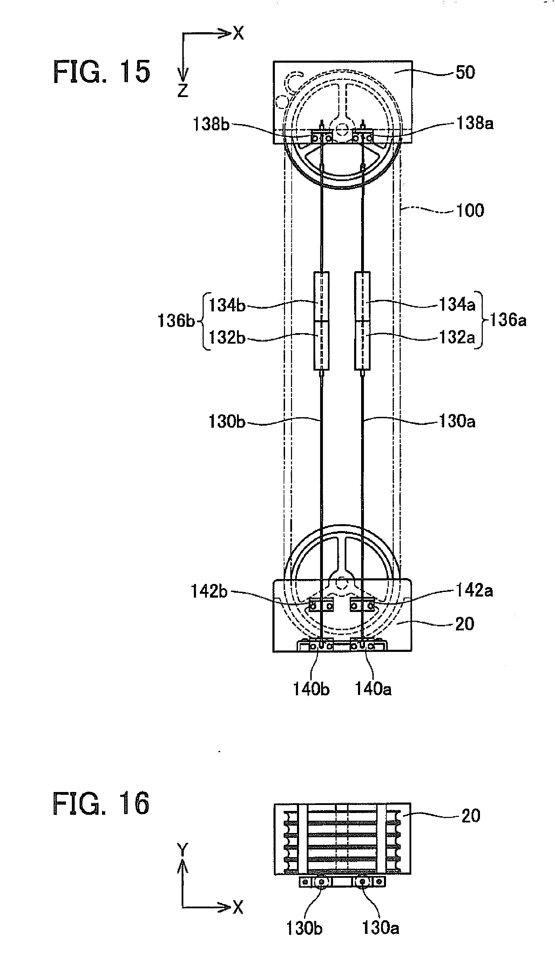

In addition, in the above-described embodiment, the two guide wires 16 are provided at the centers of both surfaces (i.e., both surfaces orthogonal to the direction of the rotation axis of the pulley) of each of the pulley units 20 and 50 (see FIGS. 2 and 3), but various modes can be employed for locations where the guide wires are provided. For example, as shown in FIGS. 15 and 16, two guide wires 130a and 130b may be provided at one of lateral surfaces (one of surfaces orthogonal to the direction of the rotation axis of the pulley) of each of the pulley units 20 and 50. In this case as well, upper ends of the guide wires 130a and 130b are attached to mounting portions 138a and 138b, respectively, of the fixed pulley unit 50, and lower ends of the guide wires 130a and 130b are fixed to the bottom plate of the housing 12. The guide wires 130a and 130b are inserted through insertion portions 140a and 142a and insertion portions 140b and 142b of the movable pulley unit 20, and weights 136a and 136b are supported at middle points of the guide wires 130a and 130b, respectively. Thus, similarly to the above-described embodiment, the operating force for operating the charging cable 100 is adjustable at two levels. In addition, in the example in FIGS. 15 and 16, no guide wires 130a and 130b are provided at the other lateral surfaces of the pulley units 20 and 50, and thus it is possible to provide the guide mechanism even when there is no space at the other lateral surface (the other of the surfaces orthogonal to the direction of the rotation axis of the pulley) of each of the pulley units 20 and 50.

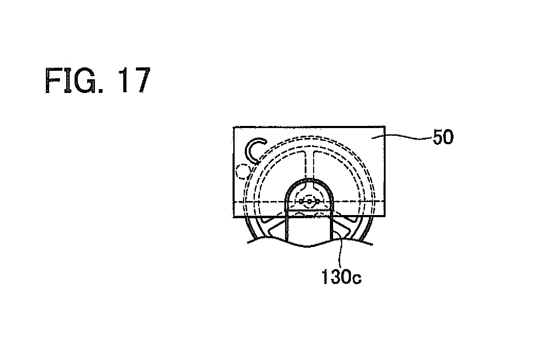

It should be noted that in the case where a guide wire is provided at only one of the lateral surfaces of each of the pulley units 20 and 50, two guide wire portions may be formed by reversing a single guide wire 130c at the fixed pulley unit 50 as shown in FIG. 17. In this case, both ends of the guide wire 130c are fixed to the bottom plate of the housing 12. According to such a configuration, it is possible to guide the movable pulley with the single guide wire, and thus it is possible to reduce the number of components.

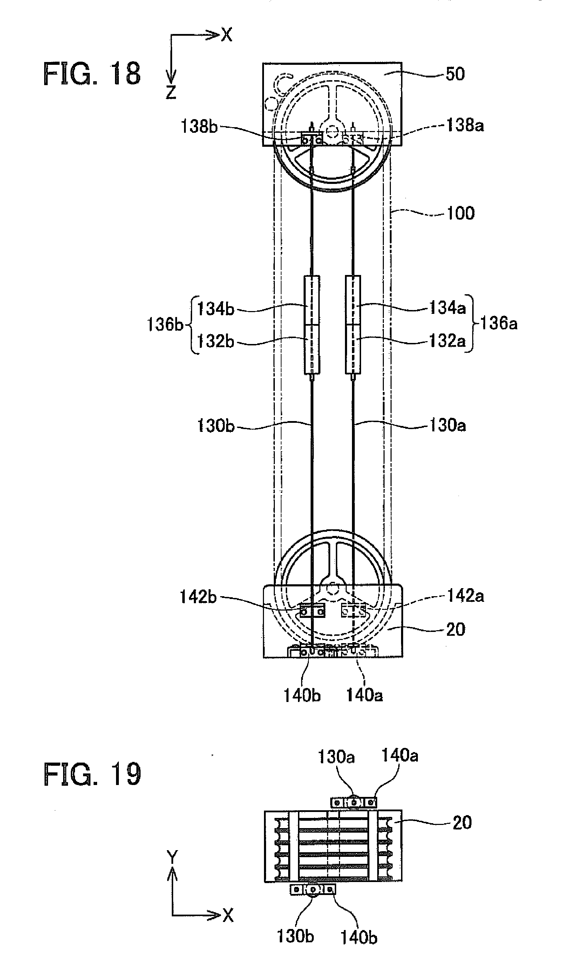

In addition, as shown in FIGS. 18 and 19, a guide wire 130a provided at one of the lateral surfaces (one of the surfaces orthogonal to the direction of the rotation axis of the pulley) of each of the pulley units 20 and 50, and a guide wire 130b provided at the other lateral surface (the other of the surfaces orthogonal to the direction of the rotation axis of the pulley) of each of the pulley units 20 and 50, may be offset from the centers of the pulley units 20 and 50 in an x axis direction. In other words, as shown in FIGS. 18 and 19, the guide wire 130b provided at one of the lateral surfaces (the surface at the front side of the drawing) of each of the pulley units 20 and 50 is offset in an x axis negative direction, and the guide wire 130a provided at the other lateral surface (the surface at the back side of the drawing) of each of the pulley units 20 and 50 is offset in an x axis positive direction. The offset amount of the guide wire 130a is the same as the offset amount of the guide wire 130b. According to such a configuration, tilt of the movable pulley 20 is restrained, and thus it is possible to reduce frictional forces produced between the movable pulley 20 and the guide wires 130a and 130b. As a result, it is possible to smoothly pull out and wind up the charging cord 100.

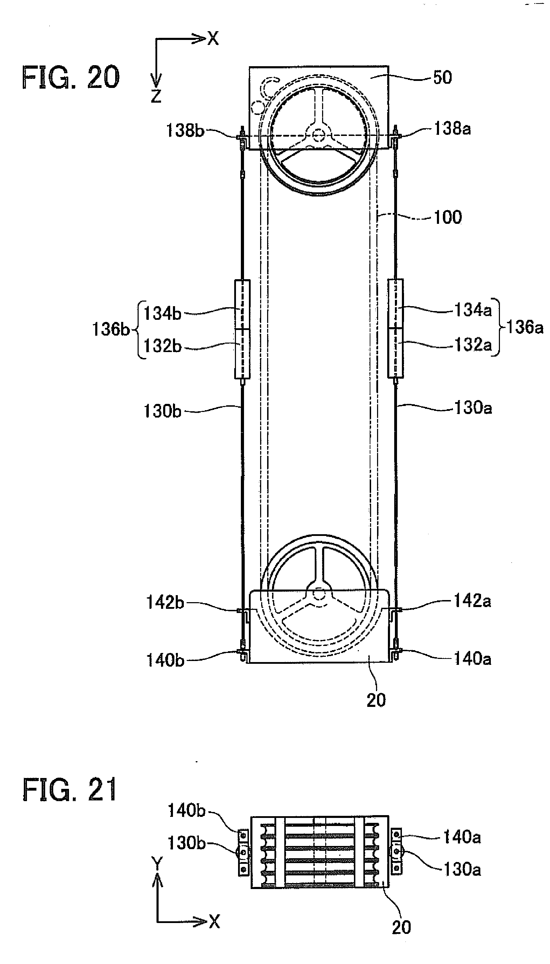

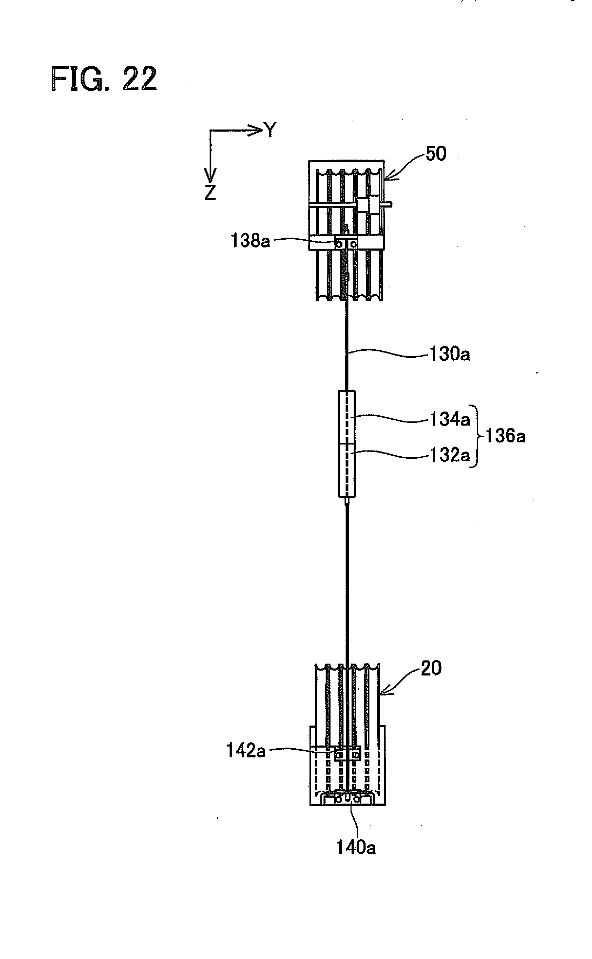

Furthermore, as shown in FIGS. 20 to 22, a guide wire 130a may be provided at one end surface (one of surfaces parallel to the direction of the rotation axis of the pulley) of each of the pulley units 20 and 50, and a guide wire 130b may be provided at the other end surface (the other of the surfaces parallel to the direction of the rotation axis of the pulley) of each of the pulley units 20 and 50. In this case as well, both end surfaces of the movable pulley unit 20 are guided by the guide wires 130a and 130b, respectively, and thus it is possible to smoothly move the movable pulley unit 20 up and down. According to such a configuration, it is possible to provide the guide mechanism even when there is no space for providing the guide wires 130a and 130b, at both lateral surfaces (both surfaces orthogonal to the direction of the rotation axis of the pulley) of each of the pulley units 20 and 50.

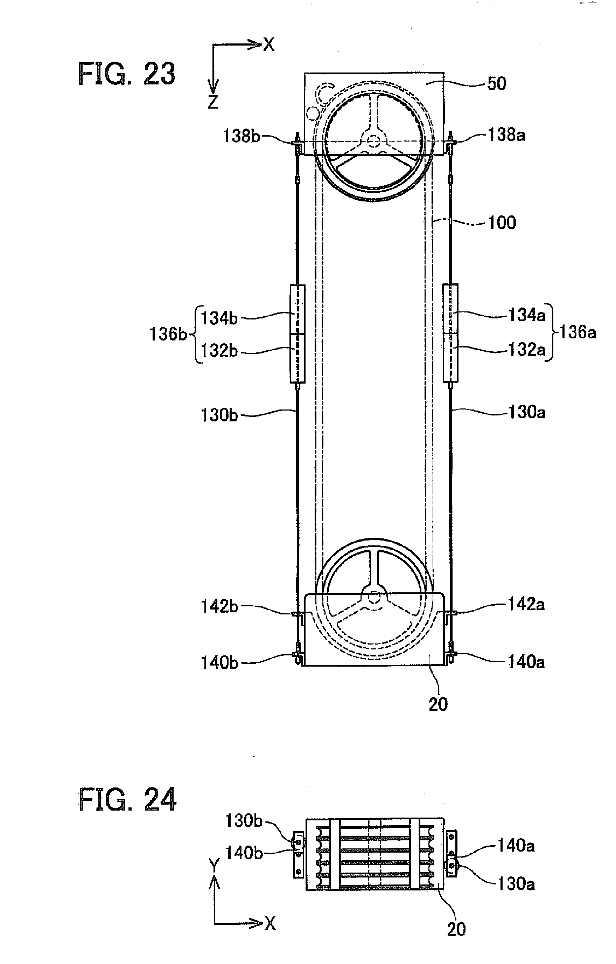

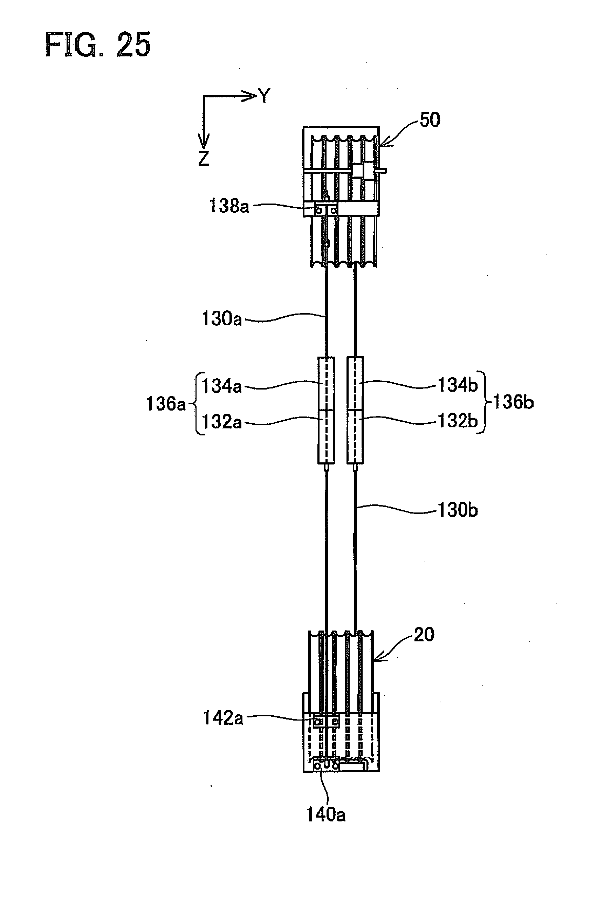

In addition, in the case where the guide wires 130a and 130b are provided at both end surfaces (both surfaces parallel to the direction of the rotation axis of the pulley) of each of the pulley units 20 and 50, the guide wire 130a may be offset in a negative direction of a y axis direction, and the guide wire 130b may be offset in a positive direction of the y axis direction, as shown in FIGS. 23 to 25. According to such a configuration, tilt of the movable pulley 20 is restrained, and thus it is possible to reduce frictional forces produced between the movable pulley 20 and the guide wires 130a and 130b.

In addition, in the above-described embodiment, the housing device (i.e., the charging station) which houses the charging cable 100 is taken as an example, but the present invention is not limited to such an example, and a housing device which houses a long object such as an electrical cord, a hose, or the like can be taken as an example.

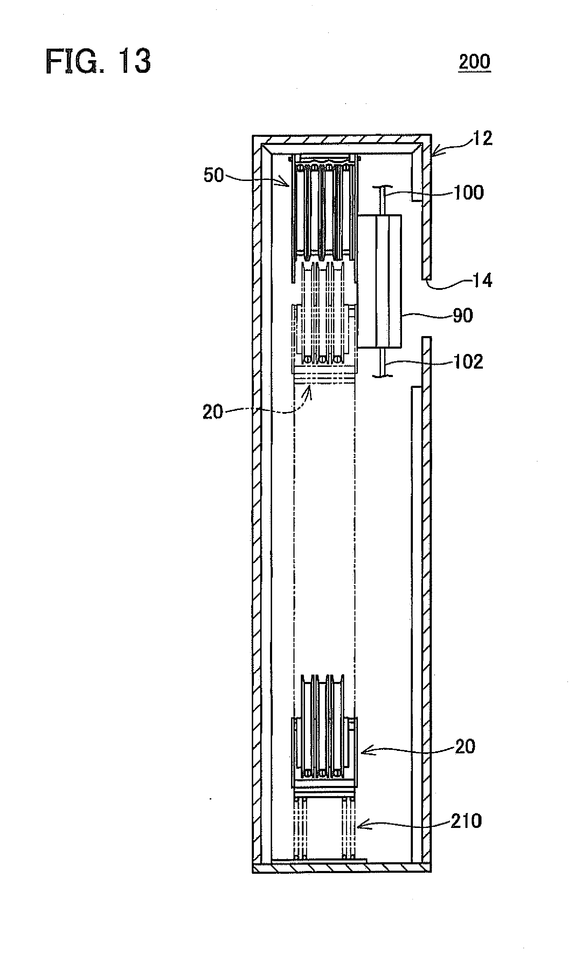

In addition, in the above-described embodiment, the operating force for pulling out the charging cable 100 from the housing 12 (the force for winding up the charging cable 100 into the housing 12) is adjusted by providing the movable pulley-side weights 36 in the movable pulley unit 20, but the present invention is not limited to such an example. For example, as in a housing device 200 shown in FIG. 13, the movable pulley unit 20 and the bottom plate of the housing 12 may be connected to each other by springs 210, and the operating force for pulling out the charging cable 100 from the housing 12 may be adjusted by spring forces of the springs 210.

Moreover, in the above-described embodiment, the movable pulley unit 20 is guided by the guide wires (an example of a guide) provided within the housing 12, but the technology disclosed in the present specification is not limited to such an example. For example, a guide rail may be provided on the inner surface of the housing 12, and the movable pulley unit may move up and down while being guided by the guide rail. In addition, instead of the guide rail, a bar-shaped steel material, a flexible wire, or the like may be used as the "guide".

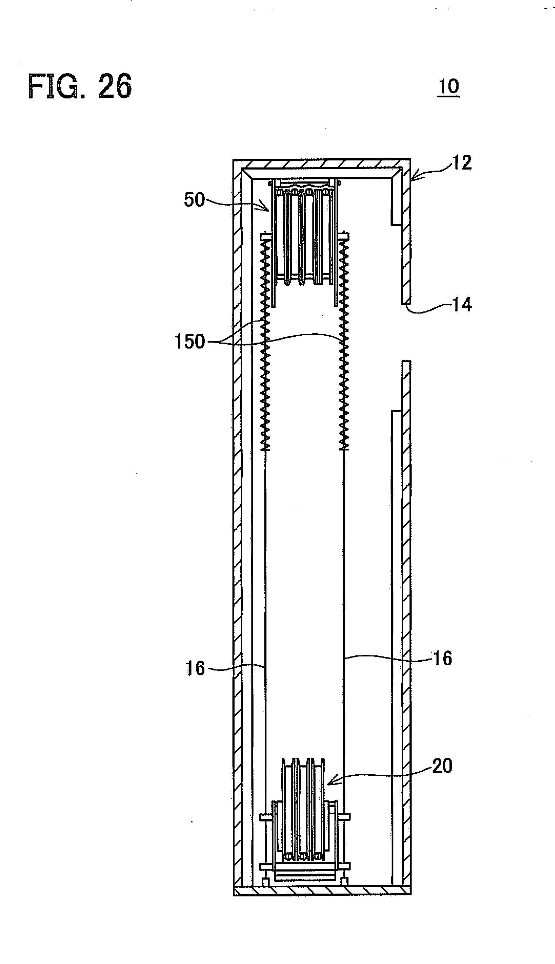

Furthermore, in the above-described embodiment, the operating force for operating the charging cable 100 is adjusted by the weights, but the technology disclosed in the present specification is not limited to such an example. For example, as in a housing device 10 shown in FIG. 26, the operating force may be adjusted by springs 150 mounted on the fixed pulley unit 50. In other words, the springs 150 are provided within the housing 12 such that the axes thereof extend in the up-down direction. Upper ends of the springs 150 are fixed to the fixed pulley unit 50, and lower ends thereof are free ends. The guide wires 16 are inserted through the insides of the springs 150. In the housing device 10, when the movable pulley unit 20 moves between the position of a lower end of the housing 12 (a position shown in FIG. 26) and a position at which the movable pulley unit 20 and the lower ends of the springs 150 come into contact with each other, the movable pulley unit 20 and the springs 150 do not come into contact with each other, and the springs 150 remain unchanged with their free lengths. Thus, a restoring force applied from the springs 150 to the movable pulley unit 20 is "0". On the other hand, when the movable pulley unit 20 moves up and down between the position at which the movable pulley unit 20 comes into contact with the lower ends of the springs 150 and an upper end of the housing 12, the spring lengths are shortened in accordance with the position of the movable pulley unit 20. As a result, a restoring force corresponding to the position of the movable pulley unit 20 (a force biasing the movable pulley unit 20 downward) is applied from the springs to the movable pulley unit 20. Therefore, even when the springs 150 are used, it is possible to adjust the operating force for operating the charging cable 100. In addition, in the case where the springs 150 are used, the higher the height of the movable pulley unit 20 is, the greater the force biasing the movable pulley unit 20 downward is. Thus, it is possible to more smoothly pull out and wind up the charging cable 100.

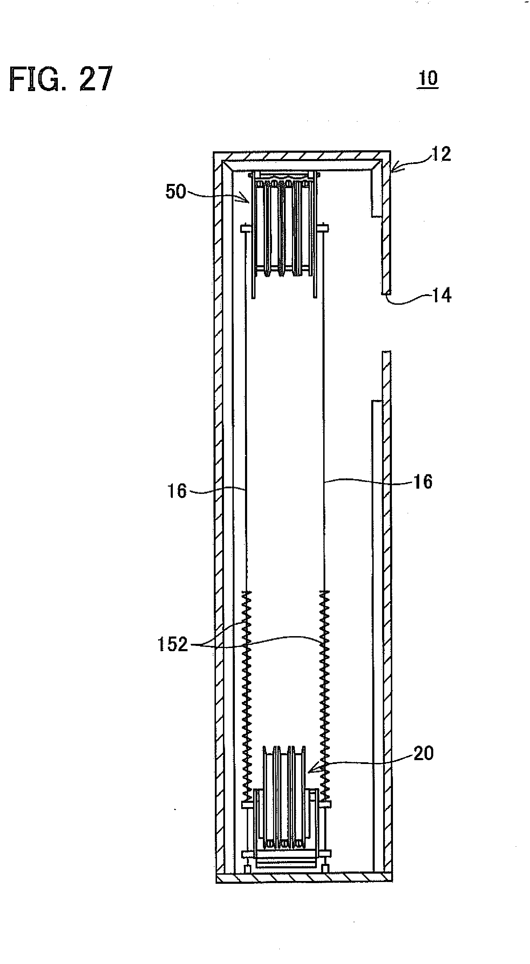

In the example shown in FIG. 26, the springs 150 are mounted on the fixed pulley unit 50, but lower ends of springs 152 may be fixed to the movable pulley unit 20 as in an example shown in FIG. 27. In this case as well, in a state where upper ends of the springs 152 are not in contact with the fixed pulley unit 50, the lengths of the springs 152 are their free lengths, and a force biasing the movable pulley unit 20 downward is "0". On the other hand, when the movable pulley unit 20 moves upward, the upper ends of the springs 152 come into contact with the fixed pulley unit 50, and further the springs 152 are compressed, the movable pulley unit 20 is biased downward by the restoring forces of the springs 152. According to such a configuration as well, it is possible to obtain the same advantageous effects as those of the housing device shown in FIG. 26.

Since the technical elements explained in this specification and in the drawings are capable of providing technical utility either singly or in various combinations, accordingly they are not to be considered as being limited to being combined as described in the Claims of this application. Moreover, the technology shown by way of example in this specification and in the drawings is capable of attaining a plurality of objectives simultaneously, and has technical utility for attaining each of those objectives individually.

## Claims

1. A housing device for housing a long object, the housing device comprising a housing, a movable pulley, an operating force adjustment mechanism, and a guide mechanism, wherein
an intermediate portion of the long object is wound on the movable pulley, the movable pulley is provided so as to be movable relative to the housing in an up-down direction while being guided by the guide mechanism, and the movable pulley is movable among a first position at which the long object is housed within the housing, a second position at which the long object is pulled out from the housing, and a third position which is set between the first position and the second position,
the long object housed within the housing is pulled out from the housing when the movable pulley moves upward from the first position toward the second position, and the long object pulled out from the housing is housed in the housing when the movable pulley moves downward from the second position toward the first position, and
the operating force adjustment mechanism generates a first biasing force biasing the movable pulley toward the first position when the movable pulley moves between the first position and the third position, and generates a second biasing force biasing the movable pulley toward the third position when the movable pulley moves between the third position and the second position, and the second biasing force is greater than the first biasing force.

2. The housing device according to claim 1, wherein
the operating force adjustment mechanism includes a first weight, and
the first weight is separated from the movable pulley when the movable pulley moves between the first position and the third position, and moves together with the movable pulley when the movable pulley moves between the third position and the second position.

3. The housing device according to claim 1, wherein
the operating force adjustment mechanism includes a spring, and
the spring remains unchanged with its spring length being a free length when the movable pulley moves between the first position and the third position, and the spring length of the spring is shortened in accordance with a position of the movable pulley and the spring biases the movable pulley toward the third position when the movable pulley moves between the third position and the second position.

4. The housing device according to any one of claims 1 to 3, wherein
the guide mechanism includes a guide which is mounted on the housing and extends in the up-down direction within the housing, and
an engagement portion which engages with the guide is formed in the movable pulley, and the movable pulley moves in the up-down direction while being guided by the guide.

5. The housing device according to claim 4, wherein
the guide includes a support portion which supports the first weight,
when the movable pulley moves between the first position and the third position, the first weight is supported by the support portion of the guide, and
when the movable pulley moves between the third position and the second position, the first weight is separated from the support portion of the guide and moves together with the movable pulley.

6. The housing device according to claim 4 or 5, wherein
the guide mechanism includes two guides which are mounted on the housing, extend in the up-down direction within the housing, and are provided at both sides in a direction of a rotation axis of the movable pulley, respectively, and
a first engagement portion which engages with one of the two guides and a second engagement portion which engages with the other of the two guides are formed in the movable pulley.

7. The housing device according to claim 6, wherein
one of the two guides and one of the two engagement portions are offset toward one side in a direction orthogonal to the rotation axis of the movable pulley and orthogonal to a direction of gravity, and
the other of the two guides and the other of the two engagement portions are offset toward another side in the direction orthogonal to the rotation axis of the movable pulley and orthogonal to the direction of gravity.

8. The housing device according to claim 4 or 5, wherein
the guide mechanism includes two guides which are mounted on the housing, extend in the up-down direction within the housing, and are provided at one side in a direction of a rotation axis of the movable pulley, and
a first engagement portion which engages with one of the two guides and a second engagement portion which engages with the other of the two guides are formed in the movable pulley.

9. The housing device according to claim 4 or 5, wherein
the guide mechanism includes two guides which are mounted on the housing, extend in the up-down direction within the housing, and are provided at both sides, respectively, in a direction orthogonal to a rotation axis of the movable pulley and orthogonal to a direction of gravity, and
a first engagement portion which engages with one of the two guides and a second engagement portion which engages with the other of the two guides are formed in the movable pulley.

10. The housing device according to claim 9, wherein
one of the two guides and one of the two engagement portions are offset toward one side in a direction of a rotation axis of the movable pulley, and
the other of the two guides and the other of the two engagement portions are offset toward another side in the direction of the rotation axis of the movable pulley.

11. The housing device according to any one of claims 1 to 10, further comprising a second weight, wherein
the movable pulley is movable to a fourth position which is set between the third position and the second position,
when the movable pulley moves between the first position and the third position, the movable pulley is separated from the first weight and the second weight,
when the movable pulley moves between the third position and the fourth position, the movable pulley and the first weight move together, but the movable pulley and the second weight are separated from each other, and
when the movable pulley moves between the fourth position and the second position, the movable pulley, the first weight, and the second weight move together.
